# EUROPEAN PATENT SPECIFICATION

(11) **EP 2 917 046 B1**
(45) Date of publication and mention of the grant of the patent: **11.01.2017**
(21) Application number: 13786479.9
(22) Date of filing: 05.11.2013
(51) Int. Cl.: B60C 9/02, B60C 13/00

(54) **TYRE HAVING LITTLE AERODYNAMIC DRAG**
REIFEN MIT GERINGEM LUFTWIDERSTAND
PNEUMATIQUE AYANT UNE FAIBLE TRAÎNÉE AÉRODYNAMIQUE

(30) Priority: 09.11.2012 FR 1260666; 25.01.2013 US 201361756628 P
(43) Date of publication of application: 16.09.2015
(73) Proprietor: Compagnie Générale des Etablissements Michelin, 63000 Clermont-Ferrand (FR); MICHELIN Recherche et Technique S.A., 1763 Granges-Paccot (CH)
(72) Inventor: GARDARIN, Benoît, F-63040 Clermont-Ferrand Cedex 9 (FR); BERGER, Eric, F-63040 Clermont-Ferrand Cedex 9 (FR); GUIMARD, Bruno, F-63040 Clermont-Ferrand Cedex 9 (FR); MUHLHOFF, Olivier, F-63040 Clermont-Ferrand Cedex 9 (FR)
(74) Representative: Bauvir, Jacques
(86) International application number: PCT/EP2013/073031
(87) International publication number: WO 2014/072281

(56) References cited:
- JP-A- H07 276 928

## Description

### FIELD OF THE INVENTION

The present invention relates to tyres for passenger vehicles. It relates more particularly to tyres having a good aerodynamic behaviour.

### BACKGROUND

Nowadays there is a growing need to reduce the energy consumption of passenger vehicles. One possible way involves reducing the aerodynamic drag of these vehicles.

The tyres with which a passenger vehicle is fitted, and more particularly the tyres mounted on the front axle of the vehicle, contribute to the aerodynamic drag of this vehicle. It is estimated that the reduction in aerodynamic drag that can be obtained by optimizing these tyres corresponds to approximately 3% of the total drag of the vehicle. In other words, by astutely designing the tyres, one may hope to reduce fuel consumption.

A tyre having good aerodynamic performance has been proposed, for example, in U.S. Patent No. 4,434,830. It is shown in Figure 3.

Although this conventional tyre, when in use on a vehicle, effectively has a low aerodynamic drag, it is imperative to improve this performance still further, in order to respond to the growing requirements of vehicle manufacturers and consumers.

A tire corresponding to the preamble of claim 1 is known from JP-A-07-276928.

### SUMMARY OF THE INVENTION

One of the objectives of the present invention is to provide tyres for passenger vehicles that have excellent aerodynamic performance.

This objective is achieved by a tyre having a particular outer profile that makes it possible to better control the turbulence zone generated by the tyre.

More precisely, the objective is achieved by a tyre comprising:
two beads designed to come into contact with a mounting rim, each bead comprising at least one annular reinforcing structure having a radially innermost point;
two sidewalls extending from the beads radially outwards, the two sidewalls joining together in a crown;
a carcass reinforcement extending from one bead to the other, passing through the crown, the carcass reinforcement being anchored in each bead to said at least one annular reinforcing structure;
the tyre having an outer profile such that, for at least one of the two sidewalls, in any radial section, the distance between the carcass reinforcement and the outer profile, measured between a point of the carcass reinforcement and the point of intersection between the outer profile and a direction perpendicular to the carcass reinforcement passing through this point of the carcass reinforcement, achieves its minimum value DMI at a first point of the carcass reinforcement having a radial distance greater than or equal to 0.50·H and less than or equal to 0.75·H of the radially innermost point of the annular reinforcing structure, H being the radial height of the tyre, the minimum value DMI being greater than or equal to 1.0 mm and less than or equal to 2.5 mm (and preferably greater than or equal to 1.0 mm and less than or equal to 2.0 mm);
wherein there is a first zone of the carcass reinforcement, surrounding the first point of the carcass reinforcement, in which the distance between the carcass reinforcement and the outer profile, measured between a first-zone point of the carcass reinforcement and the point of intersection between the outer profile and a direction perpendicular to the carcass reinforcement passing through this first-zone point of the carcass reinforcement, increases continuously while moving further away from the first point of the carcass reinforcement, radially inward and radially outward,
wherein the first zone of the carcass reinforcement has, in any radial cross section, a radially inner end point at which the distance DMA between the carcass reinforcement and the outer profile, measured between the point of the carcass reinforcement forming this radially inner end point and the point of intersection between the outer profile and a direction perpendicular to the carcass reinforcement passing through this radially inner end point is equal to or greater than 1.3 DMI;
wherein there is a second zone of the carcass reinforcement which is adjacent to and radially on the inside of the first zone of the carcass reinforcement, in which the distance between the carcass reinforcement and the outer profile, measured between a second-zone point of the carcass reinforcement and the point of intersection between the outer profile and a direction perpendicular to the carcass reinforcement passing through this second-zone point of the carcass reinforcement, is constant or decreases continuously while moving further away from the radially inner end point of the first zone;
wherein the second zone of the carcass reinforcement has, in any radial cross section, a radially inner end point, with DMD denoting the distance between the carcass reinforcement and the outer profile, measured between the point of the carcass reinforcement which forms this radially inner end point and the point of intersection between the outer profile and a direction perpendicular to the carcass reinforcement passing through this radially inner end point;
wherein there is a third zone of the carcass reinforcement which is adjacent to and radially on the inside of the second zone of the carcass reinforcement, in which, at any point in the third zone, the distance between the carcass reinforcement and the outer profile, measured between a third-zone point of the carcass reinforcement and the point of intersection between the outer profile and a direction perpendicular to the carcass reinforcement passing through this third-zone point of the carcass reinforcement, is greater than the distance DMD;
and wherein the second zone of the carcass reinforcement has a radial height that is greater than or equal to 0.05·H (and preferably greater than or equal to 0.1·H and less than or equal to 0.30·H).

Such a tyre results in aerodynamic drag that is significantly less than the aerodynamic drag obtained with a tyre according to the prior art.

Preferably, the first zone of the outer profile has no marking, and notably no marking involving a protuberance having a height of more than 0.2 mm relative to the portion of the outer profile that surrounds it, because such marking is likely to disrupt the air flow in the first and second zones and consequently to degrade the aerodynamic performance.

Another aspect of the invention relates to a vehicle comprising at least two axles, fitted with a tyre according to an embodiment of the invention, in which the tyre is fitted on the front axle, such that a sidewall comprising said first, second and third zone is on the side of the tyre that is farthest from the vehicle. It is in this way that the tyre makes a maximum contribution to reducing the aerodynamic drag of the vehicle.

Let us consider the case in which the tyre is a directional tyre, that is to say a tyre having a tread sculpture such that the grip of the tyre, when it is made to turn in one direction, differs from the grip of the tyre when it is made to turn in the other direction. A directional tyre has a preferred direction of rotation, usually indicated by an indicator such as an arrow materialized on the sidewall of the tyre, and is fitted to a vehicle so that the tyre rotates in its preferred direction of rotation when the vehicle moves forward. When it is desired to implement an embodiment of the invention on a directional tyre, it is preferable that both sidewalls have an outer profile according to an embodiment of the invention, because then it is possible to fit the tyre without distinction on the left and right sides of the vehicle, while obtaining an improvement in the aerodynamic behaviour.

If, on the other hand, the tyre is a tyre that has no preferred direction of rotation, it is preferable to ensure that only one of the sidewalls of the tyre has an outer profile according to an embodiment of the invention, because it will always be possible to fit the tyre to the vehicle such that this sidewall is on the side of the tyre that is farthest from the vehicle.

### BRIEF DESCRIPTION OF THE DRAWINGS

All the figures of this document are schematic.
Figure 1 represents a tyre according to the prior art.
Figure 2 represents a partial view in perspective of a tyre according to the prior art.
Figure 3 represents, in radial section, a reference tyre.
Figure 4 illustrates how the height H of a tyre is determined.
Figure 5 represents, in radial section, a tyre according to an embodiment of the invention.
Figure 6 shows the distance between the carcass reinforcement and the outer profile of the tyre for one portion of the carcass reinforcement according to an embodiment of the invention.

### DETAILED DESCRIPTION OF THE INVENTION

In the use of the term "radial", herein, several different uses of the word by those skilled in the art should be distinguished. First, the expression refers to a radius of the tyre. It is in this sense that it is said of a point P1 that it is "radially inside" a point P2 (or "radially on the inside" of a point P2) if it is closer to the rotation axis of the tyre than the point P2. Conversely, a point P3 is said to be "radially outside" a point P4 (or "radially on the outside" of a point P4) if it is further from the rotation axis of the tyre than the point P4. It will be said that a movement or vector points "radially inwards (or outwards)" when it points in the direction of smaller (or larger) radii. When it is a question of radial distances, this meaning of the term also applies.

On the other hand, a thread or a reinforcement is said to be "radial" when the thread or the reinforcing elements of the reinforcement make with a circumferential direction an angle greater than or equal to 80° and less than or equal to 90°. It should be specified that, as used herein, the term "thread" must be understood in a very general sense and comprises the threads that take the form of monofilaments, multifilaments, a cable, a yarn or an equivalent assembly, irrespective of the material(s) forming the thread or the surface treatment applied in order to enhance its bonding with rubber material of the tyre.

Finally, the term "radial section" designates a section on a plane that contains the rotation axis of the tyre.

An "axial" direction is a direction parallel to the rotation axis of the tyre. A point P5 is said to be "axially inside" a point P6 (or "axially on the inside" of a point P6) if it is closer to the mid-plane of the tyre than the point P6. Conversely, a point P7 is said to be "axially outside" a point P8 (or "axially on the outside" of a point P8) if it is further from the mid-plane of the tyre than the point P8. The "mid-plane" of the tyre is the plane that is perpendicular to the rotation axis of the tyre and that is situated equidistantly from the annular reinforcing structure(s) of each bead.

A "circumferential" direction is a direction that is perpendicular both to a radius of the tyre and to the axial direction.

The "rolling surface" of a tread, as referred to herein, corresponds to all of the points of the tread that come into contact with the ground or road when the tyre - inflated to its service pressure - rolls on the ground or road.

In the context of this document, the expression "rubber composition" is a rubber composition comprising at least one elastomer and at least one filler.

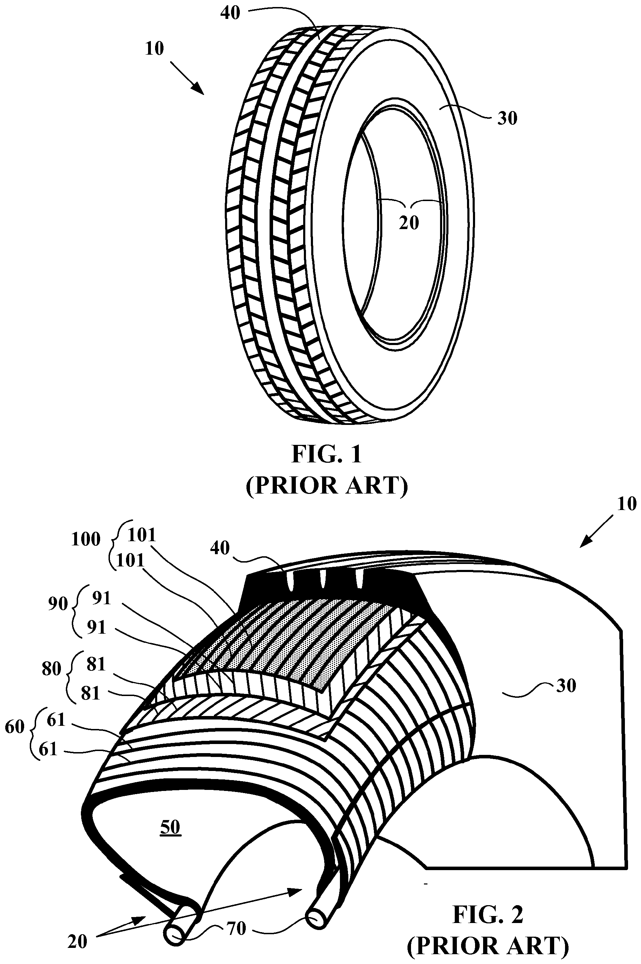

Figure 1 represents schematically a tyre 10 according to the prior art. The tyre 10 comprises a crown comprising a crown reinforcement (invisible in Figure 1) surmounted by a tread 40, two sidewalls 30 extending from the crown radially inwards, and two beads 20 radially inside the sidewalls 30.

Figure 2 represents schematically a partial view in perspective of another tyre 10 according to the prior art and illustrates various components of the tyre. The tyre 10 comprises a carcass reinforcement 60 having threads 61 coated with a rubber composition, and two beads 20 each comprising circumferential reinforcements 70 (in this instance bead wires), which hold the tyre 10 on a rim (not shown). The carcass reinforcement 60 is anchored in each of the beads 20. The tyre 10 also comprises a crown reinforcement comprising two plies 80 and 90. Each of the plies 80 and 90 is reinforced by thread-based reinforcing elements 81 and 91 which are parallel in each layer and crossed from one layer to another, making angles of between 10° and 70° with a circumferential direction. The tyre also comprises a hooping reinforcement 100, positioned radially on the outside of the crown reinforcement. This hooping reinforcement is formed of reinforcing elements 101 oriented circumferentially and wound spirally. A tread 40 is positioned on the hooping reinforcement; it is this tread 40 that makes contact with the road. The tyre 10 that is shown is a tubeless tyre; it comprises an "inner liner" 50 made of rubber composition that is impermeable to the inflation gas, and covers the inner surface of the tyre.

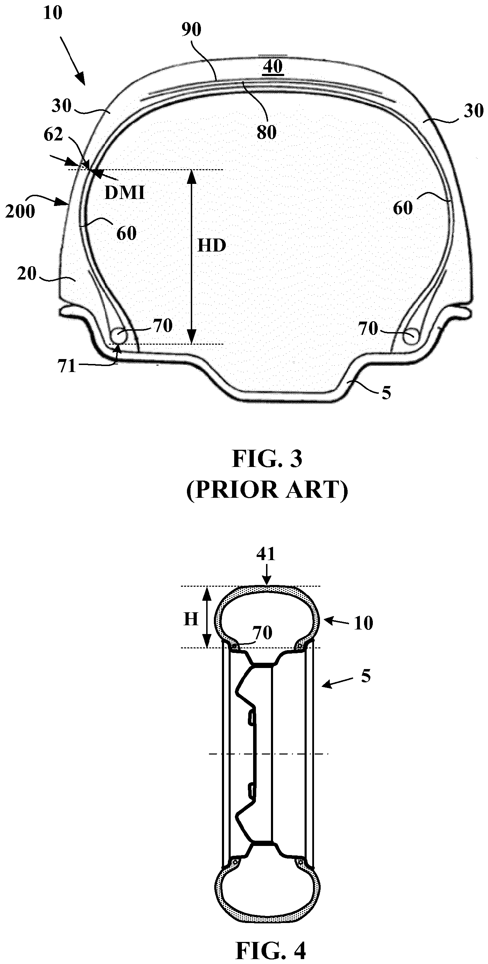

Figure 3 represents, in radial section, a portion of a reference tyre 10. This tyre has been proposed in U.S. Patent No. 4,434,830**.** This tyre comprises two beads 20 designed to come into contact with a mounting rim 5. Each bead comprises an annular reinforcing structure (in this instance, a bead wire 70) having a radially innermost point 71. Two sidewalls 30 extend from the beads 20 radially outwards and come together in a crown comprising two reinforcements 80 and 90 surmounted by a tread 40. A carcass reinforcement 60 extends from one bead 20 to the other, passing through the crown. The carcass reinforcement 60 is anchored in each bead 20 by a turn around the bead wire 70.

The tyre 10 has an outer profile 200 such that, for each of the sidewalls 30, in any radial section, the distance between the carcass reinforcement 60 and the outer profile 200 of the tyre 10, measured between a point of the carcass reinforcement and the point of intersection between the outer profile of the tyre 10 and a direction perpendicular to the carcass reinforcement passing through this point of the carcass reinforcement, reaches its minimum value DMI at a point 62 of the carcass reinforcement 60. This point 62 has a radial distance HD equal to 0.60·H from the radially innermost point 71 of the bead wire 70, H being the radial height of the tyre. The radial height H of the tyre is defined as being the radial distance between the radially innermost point 71 of the annular reinforcing structure 70 of the bead 20 and the radially outermost point 41 (Figure 4) of the tread 40 when the tyre 10 is fitted to the mounting rim 5 (as shown in Figure 4) and inflated to its service pressure.

Although this tyre, when in use on a vehicle, effectively has a low aerodynamic drag, it is imperative to further improve its performance in order to respond to the growing requirements of vehicle manufacturers and consumers. The tyres according to embodiments of the invention meet these requirements.

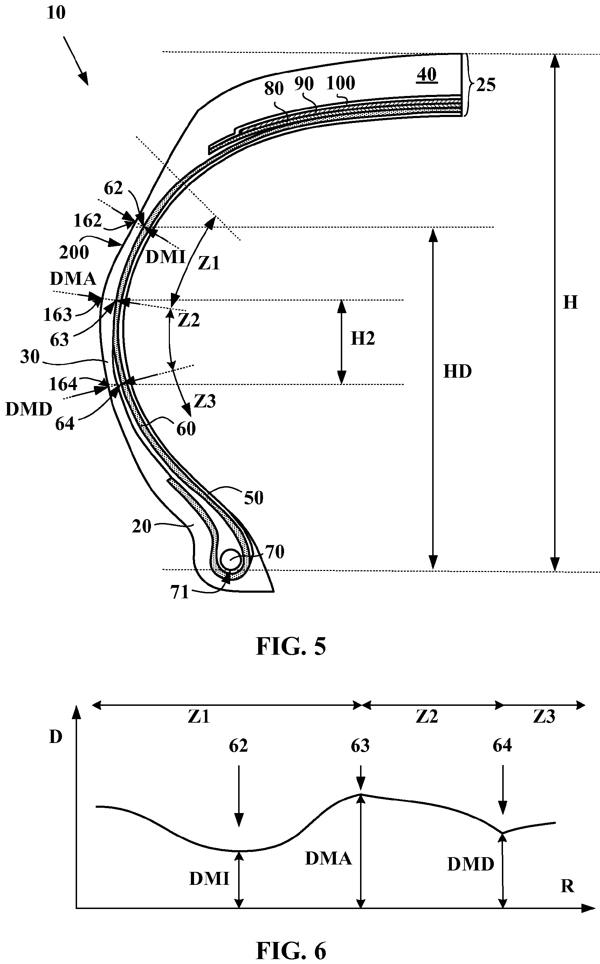

Figure 5 represents, in radial section, a portion of a tyre 10 according to an embodiment of the invention. This tyre comprises two beads 20 designed to come into contact with a mounting rim. Each bead comprises an annular reinforcing structure (in this instance, a bead wire 70) having a radially innermost point 71. Two sidewalls 30 extend from the beads 20 radially outwards and come together in a crown 25 comprising two reinforcements 80 and 90 surmounted by a hooping reinforcement 100, itself surmounted by a tread 40. A carcass reinforcement 60 extends from one bead 20 to the other, passing through the crown 25. The carcass reinforcement 60 is anchored in each bead 20 by a turn around the bead wire 70.

The tyre 10 has an outer profile 200 such that, for at least one of the sidewalls 30, in any radial section, the distance between the carcass reinforcement 60 and the outer profile 200 of the tyre, measured between a point of the carcass reinforcement and the point of intersection between the outer profile and a direction perpendicular to the carcass reinforcement passing through this point of the carcass reinforcement, reaches a minimum value DMI at a first point 62 of the carcass reinforcement 60. This first point 62 has in this instance a radial distance HD equal to 0.65·H from the radially innermost point 71 of the bead wire 70, H being the radial height of the tyre. In the tyre shown the distance DMI is equal to 1.5 mm.

As a matter of fact, when a "first point" is referred to, those skilled in the art will understand that it does not necessarily mean a mathematical point but that this first point may cover a small zone inside which the distance between the carcass reinforcement 60 and the outer profile 200 is constant and equal to DMI. The conditions specified for the first point are then fulfilled for at least one point of this small zone.

There is a first zone Z1 of the carcass reinforcement 60, surrounding the first point 62 of the carcass reinforcement 60, in which the distance D between the carcass reinforcement and the outer profile, measured between a first-zone point of the carcass reinforcement and the point of intersection between the outer profile and a direction perpendicular to the carcass reinforcement passing through this first-zone point of the carcass reinforcement, increases continuously while moving further away from the first point 62 of the carcass reinforcement, radially inward and radially outward. This is also apparent in Figure 6 which shows the distance D as a function of the radial position R for a portion of the carcass reinforcement (the radial position of the point 62 is indicated by an arrow: in this instance, when moving radially inward, R increases).

Reference numeral 162 denotes the point of intersection between the outer profile 200 of the tyre and a direction perpendicular to the carcass reinforcement 60 passing through the first point 62 of the carcass reinforcement 60.

The first zone Z1 of the carcass reinforcement 60 has, in any radial section, a first radially inner end 63. The distance DMA between the carcass reinforcement 60 and the outer profile, measured between the point of the carcass reinforcement forming this first radially inner end and the point of intersection 163 between the outer profile and a direction perpendicular to the carcass reinforcement passing through this first radially inner end 63, is, in this instance, equal to 3.1 mm (see also Figure 6), which is greater than 1.3·DMI.

There is a second zone Z2 of the carcass reinforcement 60, which is adjacent to and radially on the inside of the first zone Z1 of the carcass reinforcement 60, in which the distance D between the carcass reinforcement and the outer profile, measured between a second-zone point of the carcass reinforcement and the point of intersection between the outer profile 200 of the tyre and a direction perpendicular to the carcass reinforcement passing through this second-zone point of the carcass reinforcement, is constant or decreases continuously while moving away from the radially inner end 63 of the first zone Z1 (see also Figure 6).

The second zone Z2 of the carcass reinforcement has, in any radial section, a second radially inner end 64, DMD designating the distance between the carcass reinforcement 60 and the outer profile 200 of the tyre, measured between the point 64 of the carcass reinforcement forming this second radially inner end and the point of intersection 164 between the outer profile 200 of the tyre and a direction perpendicular to the carcass reinforcement passing through this second radially inner end 64.

There is a third zone Z3 of the carcass reinforcement, which is adjacent to and radially on the inside of the second zone Z2 of the carcass reinforcement, in which, at any point in the third zone, the distance D between the carcass reinforcement and the outer profile, measured between a third-zone point of the carcass reinforcement and the point of intersection between the outer profile and a direction perpendicular to the carcass reinforcement passing through this third-zone point of the carcass reinforcement, is greater than the distance DMD (see also figure 6).

The second zone of the carcass reinforcement has a radial height H2 that is, for the tyre shown in figure 5, equal to 0.16·H.

Tests have been carried out using CFD (computational fluid dynamics) and in a wind tunnel on a full-scale vehicle. The tests have shown that the appearance of flow separation on sidewalls of a tyre was pushed further downstream for a tyre according to an embodiment of the invention corresponding to the tyre of Figure 5, relative to a tyre according to the prior art (Figure 3). Thus, the wake generated by the tyre is improved and the overall aerodynamic drag coefficient (Cx) of the vehicle is reduced by 0.5 to 2%.

## Claims

1. Tyre comprising:
two beads (20) designed to come into contact with a mounting rim (5), each bead comprising at least one annular reinforcing structure (70) having a radially innermost point (71);
two sidewalls (30) extending from the two beads radially outwards, the two sidewalls joining together in a crown (25);
a carcass reinforcement (60) extending from one bead to the other, passing through the crown, the carcass reinforcement being anchored in each bead to said at least one annular reinforcing structure;
the tyre having an outer profile (200) such that, for at least one of the two sidewalls, in any radial section, the distance between the carcass reinforcement and the outer profile, measured between a point of the carcass reinforcement (60) and the point of intersection between the outer profile and a direction perpendicular to the carcass reinforcement passing through this point of the carcass reinforcement, achieves a minimum value DMI at a first point (62) of the carcass reinforcement having a radial distance HD greater than or equal to 0.50·H and less than or equal to 0.75·H to the radially innermost point of the annular reinforcing structure, H being the radial height of the tyre, the minimum value DMI being greater than or equal to 1.0 mm and less than or equal to 2.5 mm; wherein there is a first zone (Z1) of the carcass reinforcement, surrounding the first point of the carcass reinforcement, wherein the distance between the carcass reinforcement and the outer profile, measured between a point of the first-zone of the carcass reinforcement and the point of intersection between the outer profile and a direction perpendicular to the carcass reinforcement passing through this point of the carcass reinforcement, increases continuously while moving away from the first point of the carcass reinforcement, radially inward and radially outward;
wherein the first zone of the carcass reinforcement has, in any radial section, a radially inner end (63) wherein the distance DMA between the carcass reinforcement and the outer profile, measured between the point of the carcass reinforcement forming this first radially inner end and the point of intersection (163) between the outer profile and a direction perpendicular to the carcass reinforcement passing through this first radially inner end, is equal to or greater than 1.3.DMI;
**characterized in that** there is a second zone (Z2) of the carcass reinforcement which is adjacent to and radially inside of the first zone of the carcass reinforcement, wherein the distance between the carcass reinforcement and the outer profile, measured between a second-zone point of the carcass reinforcement and the point of intersection between the outer profile and a direction perpendicular to the carcass reinforcement passing through this second-zone point of the carcass reinforcement, is constant or decreases continuously while moving further away from the radially inner end point of the first zone;
wherein the second zone of the carcass reinforcement has, in any radial section, a second radially inner end (64), DMD designating the distance between the carcass reinforcement and the outer profile, measured between the point of the carcass reinforcement forming this second radially inner end and the point of intersection (164) between the outer profile and a direction perpendicular to the carcass reinforcement passing through this second radially inner end;
wherein there is a third zone (Z3) of the carcass reinforcement, which is adjacent to and radially on the inside of the second zone of the carcass reinforcement, wherein, at any point in the third zone, the distance between the carcass reinforcement and the outer profile, measured between a third-zone point of the carcass reinforcement and the point of intersection between the outer profile and a direction perpendicular to the carcass reinforcement passing through this third-zone point of the carcass reinforcement is greater than the distance DMD;
and wherein the second zone of the carcass reinforcement has a radial height (H2) which is greater than or equal to 0.05·H.

2. Tyre according to Claim 1, wherein the minimum value DMI is greater than or equal to 1.0 mm and less than or equal to 2.0 mm.

3. Tyre according to either one of Claims 1 and 2, wherein the second zone (Z2) of the carcass reinforcement has a radial height (H2) that is greater than or equal to 0.1·H and less than or equal to 0.30·H.

4. Tyre according to any one of Claims 1 to 3, wherein in the first zone (Z1) of the carcass reinforcement, the outer profile (200) has no marking, and notably no marking involving a protuberance having a height of more than 0.2 mm relative to the portion of the outer profile surrounding the protuberance.

5. Vehicle comprising at least two axles, fitted with a tyre according to any one of Claims 1 to 4, wherein the tyre is fitted on the front axle, such that a sidewall comprising said first (Z1), second (Z2) and third zone (Z3) is on the side of the tyre that is farthest from the vehicle.

## Patentansprüche

1. Reifen, umfassend:
zwei Reifenwülste (20), die dazu ausgelegt sind, mit einer Montagefelge (5) in Kontakt zu kommen, wobei jede Reifenwulst wenigstens eine ringförmige Verstärkungsstruktur (70) umfasst, die einen radial innersten Punkt (71) aufweist;
zwei Seitenwände (30), die sich von den beiden Reifenwülsten radial nach außen erstrecken, wobei sich die beiden Seitenwände in einem Scheitelpunkt (25) aneinanderfügen;
eine Unterbauverstärkung (60), die sich von einer Reifenwulst zur anderen erstreckt und dabei durch den Scheitelpunkt führt, wobei die Unterbauverstärkung in jeder Reifenwulst mit der wenigstens einen ringförmigen Verstärkungsstruktur verankert ist;
wobei der Reifen ein äußeres Profil (200) derart aufweist, dass für wenigstens eine der beiden Seitenwände in jedem radialen Abschnitt der Abstand zwischen der Unterbauverstärkung und dem äußeren Profil, gemessen zwischen einem Punkt der Unterbauverstärkung (60) und dem Schnittpunkt zwischen dem äußeren Profil und einer senkrecht zu der Unterbauverstärkung und durch diesen Punkt der Unterbauverstärkung verlaufenden Richtung, einen Mindest-DMI-Wert an einem ersten Punkt (62) der Unterbauverstärkung erreicht, der einen radialen Abstand HD von dem radial innersten Punkt der ringförmigen Verstärkungsstruktur aufweist, der größer als oder gleich 0,50 H und kleiner als oder gleich 0,75 H ist, wobei H die radiale Höhe des Reifens ist und der Mindest-DMI-Wert größer als oder gleich 1,0 mm und kleiner als oder gleich 2,5 mm ist;
wobei es einen ersten Bereich (Z1) der Unterbauverstärkung gibt, der den ersten Punkt der Unterbauverstärkung umgibt, wobei sich der Abstand zwischen der Unterbauverstärkung und dem äußeren Profil, gemessen zwischen einem Punkt des ersten Bereichs der Unterbauverstärkung und dem Schnittpunkt zwischen dem äußeren Profil und einer senkrecht zu der Unterbauverstärkung und durch diesen Punkt der Unterbauverstärkung verlaufenden Richtung, kontinuierlich vergrößert, während er sich von dem ersten Punkt der Unterbauverstärkung radial nach innen und radial nach außen weg bewegt;
wobei der erste Bereich der Unterbauverstärkung in jedem radialen Abschnitt ein radial inneres Ende (63) aufweist, wobei der Abstand DMA zwischen der Unterbauverstärkung und dem äußeren Profil, gemessen zwischen dem Punkt der Unterbauverstärkung, der dieses erste radial innere Ende bildet, und dem Schnittpunkt (163) zwischen dem äußeren Profil und einer senkrecht zu der Unterbauverstärkung und durch dieses erste radial innere Ende verlaufenden Richtung, gleich oder größer als 1,3 DMI ist;
**dadurch gekennzeichnet,**
**dass** es einen zweiten Bereich (Z2) der Unterbauverstärkung gibt, der sich angrenzend an den ersten Bereich der Unterbauverstärkung und radial innen in Bezug auf diesen Bereich befindet, wobei der Abstand zwischen der Unterbauverstärkung und dem äußeren Profil, gemessen zwischen einem in dem zweiten Bereich befindlichen Punkt der Unterbauverstärkung und dem Schnittpunkt zwischen dem äußeren Profil und einer senkrecht zu der Unterbauverstärkung und durch diesen in dem zweiten Bereich befindlichen Punkt der Unterbauverstärkung verlaufenden Richtung, konstant ist oder sich kontinuierlich verringert, während er sich von dem radial inneren Endpunkt des ersten Bereichs immer weiter weg bewegt;
wobei der zweite Bereich der Unterbauverstärkung in jedem beliebigen radialen Abschnitt ein zweites radial inneres Ende (64) aufweist, wobei DMD den Abstand zwischen der Unterbauverstärkung und dem äußeren Profil bezeichnet, gemessen zwischen dem Punkt der Unterbauverstärkung, welcher dieses zweite radial innere Ende bildet, und dem Schnittpunkt (164) zwischen dem äußeren Profil und einer senkrecht zu der Unterbauverstärkung und durch dieses zweite radial innere Ende verlaufenden Richtung;
wobei es einen dritten Bereich (Z3) der Unterbauverstärkung gibt, der sich angrenzend an den zweiten Bereich der Unterbauverstärkung und radial innen in diesem Bereich befindet, wobei an jedem Punkt in dem dritten Bereich der Abstand zwischen der Unterbauverstärkung und dem äußeren Profil, gemessen zwischen einem in dem dritten Bereich befindlichen Punkt der Unterbauverstärkung und dem Schnittpunkt zwischen dem äußeren Profil und einer senkrecht zu der Unterbauverstärkung und durch diesen in dem dritten Bereich befindlichen Punkt der Unterbauverstärkung verlaufenden Richtung, größer als der Abstand DMD ist;
und wobei der zweite Bereich der Unterbauverstärkung eine radiale Höhe (H2) aufweist, die größer als oder gleich 0,05 H ist.

2. Reifen nach Anspruch 1, wobei der Mindest-DMI-Wert größer als oder gleich 1,0 mm und kleiner als oder gleich 2,0 mm ist.

3. Reifen nach einem der Ansprüche 1 und 2, wobei der zweite Bereich (Z2) der Unterbauverstärkung eine radiale Höhe (H2) aufweist, die größer als oder gleich 0,1 H und kleiner als oder gleich 0,30 H ist.

4. Reifen nach einem der Ansprüche 1 bis 3, wobei in dem ersten Bereich (Z1) der Unterbauverstärkung das äußere Profil (200) keine Markierung aufweist, und insbesondere keine Markierung, die einen Vorsprung mit sich bringt, der eine Höhe von mehr als 0,2 mm relativ zu dem Teil des äußeren Profils, der den Vorsprung umgibt, aufweist.

5. Fahrzeug, das wenigstens zwei Achsen umfasst und mit einem Reifen nach einem der Ansprüche 1 bis 4 ausgerüstet ist, wobei der Reifen auf eine solche Weise an der Vorderachse angebracht ist, dass sich eine Seitenwand, die den ersten (Z1), zweiten (Z2) und dritten Bereich (Z3) umfasst, auf der Seite des Reifens befindet, die am weitesten von dem Fahrzeug entfernt ist.

## Revendications

1. Pneumatique comportant :
deux bourrelets (20) destinés à entrer en contact avec une jante de montage (5), chaque bourrelet comportant au moins une structure annulaire de renforcement (70) ayant un point (71) radialement le plus à l'intérieur ;
deux flancs (30) prolongeant les bourrelets radialement vers l'extérieur, les deux flancs s'unissant dans un sommet (25) ;
une armature de carcasse (60) s'étendant d'un bourrelet à l'autre, en passant par le sommet, l'armature de carcasse étant ancrée dans chaque bourrelet à ladite au moins une structure annulaire de renforcement ;
le pneumatique ayant un profil extérieur (200) tel que, pour au moins l'un des deux flancs, dans toute section radiale, la distance entre l'armature de carcasse et le profil extérieur du pneumatique, mesurée entre un point de l'armature de carcasse (60) et le point d'intersection entre le profil extérieur du pneumatique et la direction perpendiculaire à l'armature de carcasse passant par ce point de l'armature de carcasse, atteint sa valeur minimale DMI en un premier point (62) de l'armature de carcasse ayant une distance radiale (HD) supérieure ou égale à 0.50·H et inférieure ou égale à 0.75·H dudit point radialement le plus à l'intérieur de la structure annulaire de renforcement, H étant la hauteur radiale du pneumatique, la valeur minimale DMI étant supérieure ou égale à 1,0 mm et inférieure ou égale à 2,5 mm ;
dans lequel il existe une première zone (Z1) de l'armature de carcasse, entourant ledit premier point de l'armature de carcasse, dans laquelle la distance entre l'armature de carcasse et le profil extérieur du pneumatique, mesurée entre un point de l'armature de carcasse et le point d'intersection entre le profil extérieur du pneumatique et la direction perpendiculaire à l'armature de carcasse passant par ce point de l'armature de carcasse, augmente de manière continue lorsqu'on s'éloigne dudit premier point de l'armature de carcasse, radialement vers l'intérieur et radialement vers l'extérieur,
dans lequel la première zone de l'armature de carcasse possède, dans toute section radiale, une extrémité (63) radialement intérieure, en laquelle la distance (DMA) entre l'armature de carcasse et le profil extérieur du pneumatique, mesurée entre le point de l'armature de carcasse formant cette extrémité radialement intérieure et le point d'intersection (163) entre le profil extérieur du pneumatique et la direction perpendiculaire à l'armature de carcasse passant par cette extrémité radialement intérieure, est égale ou supérieure à 1.3-DMD ;
**caractérisé en ce qu'** il existe une deuxième zone (Z2) de l'armature de carcasse, adjacente et radialement à l'intérieur de ladite première zone de l'armature de carcasse, dans laquelle la distance entre l'armature de carcasse et le profil extérieur du pneumatique, mesurée entre un point de l'armature de carcasse et le point d'intersection entre le profil extérieur du pneumatique et la direction perpendiculaire à l'armature de carcasse passant par ce point de l'armature de carcasse, est constante ou diminue de manière continue lorsqu'on s'éloigne de l'extrémité radialement intérieure de la première zone ;
dans lequel la deuxième zone de l'armature de carcasse possède, dans toute section radiale, une extrémité (64) radialement intérieure, DMD désignant la distance entre l'armature de carcasse et le profil extérieur du pneumatique, mesurée entre le point de l'armature de carcasse formant cette extrémité radialement intérieure et le point d'intersection (164) entre le profil extérieur du pneumatique et la direction perpendiculaire à l'armature de carcasse passant par cette extrémité radialement intérieure ;
dans lequel il existe une troisième zone (Z3) de l'armature de carcasse, adjacente et radialement à l'intérieur de deuxième zone de l'armature de carcasse, dans laquelle, en tout point, la distance entre l'armature de carcasse et le profil extérieur du pneumatique, mesurée entre un point de l'armature de carcasse et le point d'intersection entre le profil extérieur du pneumatique et la direction perpendiculaire à l'armature de carcasse passant par ce point de l'armature de carcasse, est supérieure à la distance DMD ;
et dans lequel la deuxième zone de l'armature de carcasse a une hauteur radiale (H2) supérieure ou égale à 0,05·H.

2. Pneumatique selon la revendication 1, dans lequel la valeur minimale DMI est supérieure ou égale à 1,0 mm et inférieure ou égale à 2,0 mm.

3. Pneumatique selon la revendication 1 ou 2, dans lequel la deuxième zone (Z2) de l'armature de carcasse a une hauteur radiale (H2) supérieure ou égale à 0,1·H et inférieure ou égale à 0,30·H.

4. Pneumatique selon l'une quelconque des revendications 1 à 3, dans lequel la première zone (Z1) du profil extérieur (200) est dépourvue de tout marquage, et notamment de tout marquage impliquant des protubérances ayant une hauteur de plus de 0,2 mm par rapport à la partie du profil extérieur qui les entoure.

5. Véhicule comportant au moins deux essieux, équipé d'un pneumatique selon l'une quelconque des revendications 1 à 4, dans lequel le pneumatique est monté sur l'essieu avant, de manière à ce que le flanc comprenant ladite première (Z1), seconde (Z2) et troisième (Z3) zone est sur le côté du pneumatique qui est le plus éloigné du véhicule.
